# NEW EUROPEAN PATENT SPECIFICATION

(11) **EP 0 233 292 B2**
(45) Date of publication and mention of the opposition decision: **13.03.1996**
(45) Mention of the grant of the patent: 17.07.1991
(21) Application number: 86902897.7
(22) Date of filing: 30.04.1986
(51) Int. Cl.: B29C 45/76

(54) **CONTROL SYSTEM FOR INJECTION MOLDING MACHINE DRIVEN BY SERVO MOTORS**
REGELUNGSSYSTEM FÜR EINE VON SERVOMOTOREN ANGETRIEBENE EINSPRITZGIESSVORRICHTUNG
SYSTEME DE COMMANDE POUR MACHINE DE MOULAGE PAR INJECTION ENTRAINE PAR DES SERVOMOTEURS

(30) Priority: 30.04.1985 JP 91205/85
(43) Date of publication of application: 26.08.1987
(73) Proprietor: FANUC LTD., Minamitsuru-gun, Yamanashi 401-05 (JP)
(72) Inventor: OTAKE, Hiromasa 4-5-3, Minami-cho, Tokyo 188 (JP); NEKO, Noriaki 3-27, Tamadaira, Tokyo 191 (JP)
(74) Representative: Billington, Lawrence Emlyn
(86) International application number: JP8600221
(87) International publication number: WO8606323

(56) References cited:
- EP-A- 0 167 630
- EP-A- 0 203 201
- JP-A- 6 119 328
- JP-A-60 196 324
- Modern plastics international, vol.9, pages 8-11, 12/79

## Description

The present invention relates to a control system of an injection molding machine driven by a servo motor.

In a conventional injection molding machine, the injection mechanism or the clamping mechanism is driven by a hydraulic pressure. Therefore, it is impossible to automatically operate some of the components thereof, or to selectively perform different operations. In order to perform, e.g., a dry cycle operation for driving only the clamping mechanism or an ejector, a closing operation or a releasing operation, various switches or the like must be arranged and set in various modes.

On the other hand, injection molding machines driven by servo motors have been developed. These servo motors are controlled by a numerical control unit or the like and control various types of operations.

According to the present invention there is provided an injection molding machine having a CNC control system comprising an operation panel with a display, an NC central processing unit and a memory means storing an NC program for driving the injection molding machine, characterised in that the injection molding machine is driven by a servomotor, the memory means stores a plurality of NC programs for driving the injection molding machine, and the CNC control system comprises a program controller operable to monitor various preset conditions set by said operation panel with a display and operation commands set by a main operation panel of the injection molding machine, and to automatically select an appropriate one of said NC programs in dependence upon said preset conditions and operation commands, whereby when the injection molding machine is in use it will be controlled by the accordingly automatically selected appropriate one of said NC programs.

The present invention provides an injection molding machine driven by a servo motor, wherein the injection molding machine is automatically driven according to various preset conditions. Preferably, only part of operations of the injection molding machine such as a normal injection operation, a clamping operation, and a metering operation, can be selectively performed as desired in dependence upon the NC program selected.

The memory means may store various operation programs for operating respective sections of the machine in a dry cycle operation and a manual operation as well as for a normal operation, and the injection molding machine is controlled and operated on the basis of the present conditions. Various types of operations can thus be easily performed simply by operation at an MDI/CRT or a main operation panel. Therefore, an injection molding machine which is easy for an operator to operate can be provided.

### Brief Description of Drawing

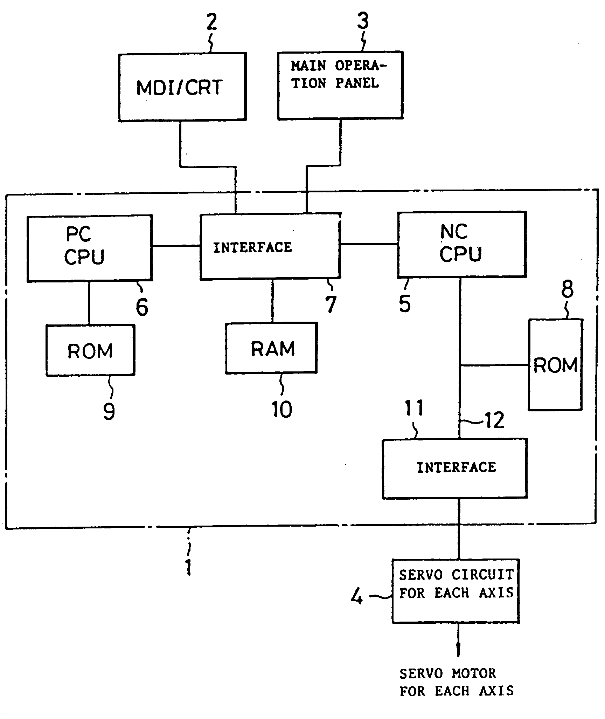

The single figure is a block diagram showing the main part of an injection molding machine embodying the present invention.

The drawing is a block diagram showing the main part of an injection molding machine embodying the present invention. Referring to the drawing, reference numeral 1 denotes a CNC (a computer built-in numerical control unit); 2, an MDI/CRT (an operation panel with a display); and 3, a main operation panel arranged in the main body of an injection molding machine. The main operation panel 3 is provided with switches such as a power switch, automatic, semiautomatic, and manual switches, and serves to input drive commands or the like for manual operations of a clamping device, an ejector, the injection unit, the die height mechanism, the screw mechanism, and the extruder mechanism. Reference numeral 4 denotes a servo circuit connected to and arranged for each servo motor. Each of servo circuits 4 drives and controls an associated one of servo motors for clamping and driving, for mold thickness adjustment, for the ejector, for injection, for metering, and for nozzle touching, respectively. The above mentioned CNC 1 mainly consists of an NC central processing unit (to be referred to as a CPU hereinafter) 5 and a program controller (to be referred to as a PC hereinafter) CPU 6. A ROM 8 for storing control programs for controlling the overall injection molding machine is arranged in the NCCPU 5. The NCCPU 5 is connected to each servo circuit for the corresponding axis through a bus 12 and an interface 11. The PCCPU 6 is connected to a ROM 9 for storing programs to control the operation sequence. The NCCPU 5 is connected to the PCCPU 6 through an interface 7. The MDJ/CRT 2, the main operation panel 3, and a non-volatile RAM 10 are connected to the interface 7. The non-volatile RAM 10 stores a plurality of NC programs for driving the injection molding machine according to conditions set by the operation panel of the MDI/CRT 2 or signals from the main operation panel 3. That is, the RAM 10 stores various programs 1 to N including a program for driving the injection in a normal cycle, a program for driving in a dry cycle, a program for performing only manual releasing, a program for metering, and a program for use when an ejector is inoperative (or when the ejector is not driven by a servo motor but is simply operated mechanically).

While the injection machine is not operated, the FCCPU 6 monitors the conditions set by the MDI/CRT 2 and the input signals from the main operation panel 3 according to the sequence program stored in the ROM 9. The CPU 6 selects a program stored in the RAM 10 in response to these preset conditions and the input signals from the main operation panel 3, thereby loading the selection program code at a register for selection programs. At the same time, the CPU 6 supplies a start command to the NCCPU 5. The CPU 5 reads out the program stored in the register for selection programs from the RAM 10, thereby driving the servo motor for each axis of the injection molding machine, according to the program, through the servo motor 4 for each axis. Assume that the MDI/CRT 2 is OFF and an automatic drive command is input from the main operation panel 3. A program for driving in a dry cycle without metering operation is selected. Therefore, the NCCPU 5 controls the injection molding machine by this program. When a manual releasing command is input from the main operation panel 3, a program for manual releasing is selected. Thus, the injection machine is controlled by the program.

## Claims

1. An injection molding machine having a CNC control system (1) comprising an operation panel with a display (2), an NC central processing unit (5) and a memory means (10) storing an NC program for driving the injection molding machine, characterised in that the injection molding machine is driven by a servomotor, the memory means 10 stores a plurality of NC programs for driving the injection molding machine, and the CNC control system (1) comprises a program controller (6) operable to monitor various preset conditions set by said operation panel with a display (2) and operation commands set by a main operation panel (3) of the injection molding machine, and to automatically select an appropriate one of said NC programs in dependence upon said preset conditions and operation commands, whereby when the injection molding machine is in use it will be controlled by the accordingly automatically selected appropriate one of said NC programs.

2. An injection molding machine according to claim 1, wherein the NC programs can provide only parts of operations of the injection molding machine.

3. An injection molding machine according to claim 2, wherein said parts of operations comprise a normal injection operation, a clamping operation and a metering operation.

4. An injection molding machine according to claim 2, wherein the NC programs include a program for driving the injection in a normal cycle, a program for driving in a dry cycle, a program for performing only manual releasing, a program for metering, and a program for use when an ejector is inoperative.

## Patentansprüche

1. Einspritzgießvorrichtung mit einem CNC-Steuersystem (1) mit einer Schalttafel mit einer Anzeige (2), einer NC-Zentralverarbeitungseinheit (5) und einer Speichervorrichtung (10), die ein NC-Programm zur Ansteuerung der Einspritzgießmaschine speichert,
dadurch **gekennzeichnet**,
daß die Einspritzgießmaschine durch einen Servomotor angetrieben ist, die Speichereinrichtung (10) mehrere NC-Programme zur Ansteuerung der Einspritzgießmaschine speichert und das CNC-Steuersystem (1) einen Programm-Controller (6) aufweist, der verschiedene voreingestellte Bedingungen, die durch die Schalttafel mit einer Anzeige (2) eingestellt sind und durch eine Handschalttafel (3) der Einspritzgießmaschine eingestellte Operationsbefehle überwacht, und der automatisch ein geeignetes der NC-Programme abhängig von den voreingestellten Bedingungen und Operationsbefehlen wählt, wobei die Einspritzgießmaschine im Betrieb durch das entsprechend automatisch ausgewählte geeignete CN-Programm gesteuert wird.

2. Einspritzgießvorrichtung nach Anspruch 1, bei der die NC-Programme nur Teile von Operationen der Einspritzgießvorrichtung zur Verfügung stellen.

3. Einspritzgießvorrichtung nach Anspruch 2, bei der die Teile der Operationen einen normalen Einspritzvorgang, einen Klemmvorgang und einen Meßvorgang umfassen.

4. Einspritzgießvorrichtung nach Anspruch 2, bei der die NC-Programme ein Programm zum Bewirken des Einspritzvorgangs in einem normalen Zyklus, ein Programm zum Betreiben in einem Leerlaufzyklus, ein Programm zum Durchführen einer Freigabe nur von Hand, ein Programm zum Messen und ein Programm zur Benutzung dann, wenn eine Einspritzeinrichtung nicht betriebsbereit ist, aufweisen.

## Revendications

1. Une machine de moulage par injection présentant un système de commande (1) de type CNC comprenant un tableau de commande avec affichage (2), une unité de traitement centrale NC (5) et un moyen à mémoire (10) stockant un programme NC pour entraîner la machine de moulage par injection, caractérisée en ce que la machine de moulage par infection est entraînée par un servomoteur, les moyens à mémoire (10) stockent un ensemble de programmes NC pour entraîner la machine de moulage par injection, et le système de commande (1) de type CNC comprend une unité de commande de programmes (6) pouvant être actionnée pour commander diverses conditions préréglées réglées par ledit tableau de commande avec affichage (2) et des instructions de fonctionnement réglées par un tableau principal de commande (3) de la machine de moulage par injection, et pour choisir automatiquement un programme approprié parmi lesdits programmes NC en dépendance desdites conditions préréglées et desdites instructions de fonctionnement, de sorte que, quand la machine de moulage par injection est en service, elle sera commandée par le programme approprié choisi en conséquence automatiquement parmi lesdits programmes NC.

2. Une machine de moulage par injection suivant la revendication 1, dans laquelle les programmes NC peuvent effectuer seulement des parties des fonctions de la machine de moulage par injection.

3. Une machine de moulage par injection suivant la revendication 2, dans laquelle lesdites parties des fonctions comprennent une fonction d'injection normale, une fonction de serrage et une fonction de dosage.

4. Une machine de moulage par injection suivant la revendication 2, dans laquelle les programmes NC comprennent un programme pour entraîner l'injection dans un cycle normal, un programme pour entraîner un cycle de séchage, un programme pour n'effectuer qu'un démoulage manuel, un programme de dosage, et un programme destiné à être utilisé lorsqu'un éjecteur ne fonctionne pas.
